# EUROPEAN PATENT APPLICATION

(11) **EP 4 606 694 A1**
(43) Date of publication of application: **27.08.2025**
(21) Application number: 24159051.2
(22) Date of filing: 22.02.2024
(51) Int. Cl.: B64C 1/06, F16F 7/02

(54) **AIRCRAFT AND ASSEMBLY WITH ROTATIONAL ENERGY ABSORBING ATTACHMENT**

(71) Applicant: Airbus Operations GmbH, 21129 Hamburg (DE)
(72) Inventor: Siemann, Martin, 21129 Hamburg (DE)

(57) **Abstract**

Disclosed is an assembly 100 comprising a first component 10 and a second component 20 which are statically connected to each other by an energy absorbing attachment. The energy absorbing attachment is formed by at least one notch 11a, 11b arranged in the first component 10 and running along a circular arc, and by at least one pin 31a, 31b joining the first component 10 with the second component 20. The at least one pin 31a, 31b engages into the at least one notch 11a, 11b and is adapted to be guided therein, under a load impairing the assembly, in a rotational direction R.

Further disclosed is an aircraft comprising such assembly 100.

## Description

The present invention concerns an assembly comprising at least two components. The invention further concerns an aircraft comprising such assembly.

The consideration of potential crash scenarios generally is an important field in particular in vehicle construction. For instance, aircraft crashworthiness is of particular interest in composite airframe structures due to the typically brittle failure modes of composite structures, which changes the energy absorption mechanisms in comparison to metallic airframe structures. Therefore, particular energy absorbing devices may be incorporated into the airframe in order to control the energy absorption and the fuselage crash kinematics. The overall objective is the protection of the occupants in potential crash events (retention of items of mass, maintenance of acceptable loads experienced by the occupants, maintenance of a survivable volume, maintenance of the occupant egress paths).

Energy absorption in composite structures can be achieved by means such as progressive stable crushing of profiles, or progressive slicing of struts, or progressive bearing-mode absorption by linear bearing absorbers as disclosed in the paper "Effects of transient dynamic loading on the energy absorption capability of composite bolted joints undergoing extended bearing failure" of Feser et al.

### (Composite Structures 247, 1 September 2020, 112476)

Bearing mode absorbers are also dealt with in document "Bearing Mode Absorber - On the Energy Absorption Capability of Pulling a Bolt through a Composite or Sandwich Plate" of S. Heimbs and T. Bergmann (Procedia Engineering 88, 2014, pp. 149-156).

In the publication *"*Crash concepts for CFRP transport aircraft-comparison of the traditional bend frame concept versus the developments in a tension absorber concept" of Warmer et al. (International Journal of Crashworthiness, 1754-2111, 2017), a bend frame concept and a triangle area are disclosed.

It is an object of the present invention to provide an assembly and an aircraft facilitating an improved failure control.

The object is achieved with an assembly according to claim 1, and with an aircraft according to claim 14. Advantageous embodiments are disclosed in the dependent claims, the description, and the drawings.

An assembly according to the present invention comprises at least two components which are connected to each other by an energy absorbing attachment (thus, a joint configured to provide for energy absorption) which is formed by at least one notch and at least one pin engaging in the notch.

The connection of the at least two components is statical, i.e., durable up to a design trigger load. Accordingly, unless a load impairing the assembly is applied thereon, the first and the second components are immobile relative to each other. The load may in particular be an impact or a quasi-static load.

The at least one notch is arranged in the first component and runs along a circular arc. The at least one pin joins the first component with the second component and engages in the at least one notch. Therein, under a load impairing the assembly (such as in a potential crash event), the at least one pin is guided within the at least one notch in a rotational direction (along the circular arc).

Accordingly, the energy absorbing attachment comprised by an assembly according to the present invention is based on rotational kinematics using a bearing mode energy absorption principle employing a circular notch. It advantageously facilitates a transfer of static loads including moments up to a design trigger load (moment) at which initiation of bearing mode absorption is triggered. Therein, the course of the at least one notch determines a failure path and length and thereby serves to control a failure of the energy absorbing attachment. As a consequence, a proper design of the at least one notch allows to maintain a structural integrity of the assembly. As the at least one pin remains in place and does not fail, the structural integrity is kept also during and after a bearing mode absorption.

Moreover, translational loads can be transferred, by the components, at any time, even during or after triggering a bearing absorption. Furthermore, as the energy absorbing attachment included in the assembly according to the invention works well also under off-axis loading, an improved robustness of the assembly is achieved. Therein, the energy absorbing attachment has low or even insignificant weight impact.

The at least one pin of the energy absorbing attachment comprised by the assembly according to the present invention may be integrally shaped with the second component, or it may be a separate element. It may extend into or even pass through a hole formed, at a ground of the at least one notch, in the first component. In such embodiments, the at least one pin may at least partially damage the first component at the ground of the notch when it is moved, under the impairing load, through the notch during the event of energy absorption. Accordingly, in such embodiments, the material of the first component at said ground serves as a buffer opposing to the impairing load and decelerating the rotation of the first and the second component relative to each other.

In particular, the at least one pin may penetrate the first and the second component. According to advantageous embodiments, the at least one pin may run through respective holes in the first and the second components and thereby serve or at least contribute to counteract a movement of the first and the second component relative to each other, thus providing for or at least contribute to that the connection thereof is static.

An angle enclosed by the circular arc at a centre point of the circular arc may preferably be at least 40°, at least 50° or at least 60°. Additionally or alternatively, said angle may be at most 150°, at most 120° or at most 100°. Such ranges provide for particularly advantageous failure paths maintaining structural integrity of the assembly.

Following the rotational direction, at least in a portion, the at least one notch may narrow and/or flatten out and/or have a boundary comprising one or several protrusion/s. Such design features of the notch advantageously serve to increase a bearing force in the rotational direction. Accordingly, the bearing mode absorption can be slowed down and/or stopped after a pre-defined rotational angle.

According to advantageous embodiments, the energy absorbing attachment is formed by at least two notches each running along a respective circular arc, and at least two pins each of which joins the first component and the second component, and engages in a respective one of said at least two notches. To further distinguish the notches, the at least one notch (arranged in the first component) and the at least one pin engaging therein as mentioned above are also referred to herein as "first notch" and "first pin", respectively, and another notch and pin (of the at least two) are denominated as "further notch" and "further pin".

The respective circular arcs of the first and the further notch may form part of concentric or even identical circles (such that a design failure load can be increased).

The first and the further notch may both be arranged in the first component, or the further notch may be arranged in the second component.

The assembly according to the present invention may further comprise a third component statically connected, by the energy absorbing attachment, to the first component and the second component. The third component may have arranged therein a third component's notch running along a circular arc which is coaxial to the circular arc the notch of the first component runs along. The pin may then engage also in the third component's notch.

According to advantageous embodiments, the first component and/or the second component (and/or, if applicable, the third component) of the assembly according to the present invention at least partially consist/s of a composite material.

The assembly according to the present invention may advantageously form part of an aircraft. Accordingly, in such embodiments, the first component and the second component (and, if applicable, the third component) are constituents of an aircraft, e.g., at least a portion of a tank, or at least a portion of a fuselage reinforcement structure (such as a frame or a stringer), for example. In particular, one of the components may be an outer rib of an aircraft's hydrogen tank (at least a part of which may be of a composite material), and another one of the components may be a load introduction arm, e.g. serve as a tank mount (possibly at least partially made of a composite material). In case the assembly comprises three components as mentioned above, the first and the third components may be outer ribs of a hydrogen tank, and the second component may be a load introduction arm; alternatively, the first and the third components may be load introduction arms, and the second component may be an outer rib of a hydrogen tank.

In such embodiments, the energy absorption attachment of the assembly may thus integrate a potential crash absorption into existing structures which in this manner may have an augmented functionality.

An aircraft according to the present invention comprises at least one assembly according to an embodiment of the present invention.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure.

Shown are schematically in
- Fig. 1a:: an assembly according to an exemplary embodiment of the present invention;
- Fig. 1b:: a sectional perspective view of the assembly of Figure 1a; and
- Fig. 2:: an exemplary moment-rotation characteristic of an energy absorbing attachment of an assembly according to the present invention.

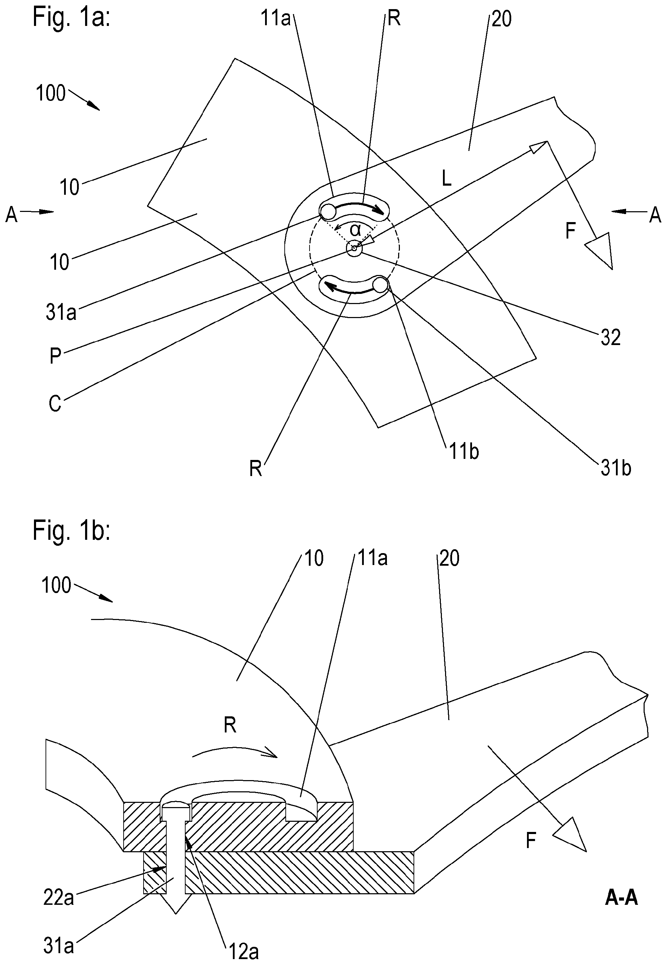

Figures 1a, 1b depict an assembly 100 according to an exemplary embodiment of the present invention which embodies a concept of bearing mode energy absorption within a rotational kinematic hinge/ pair. Therein, Figure 1a provides an illustration of the functionality of the energy absorption attachment comprised by the assembly 100, and Figure 1b shows a cross section of a portion of the assembly in a perspective view.

The assembly 100 shown in Figures 1a, 1b comprises a first component 10 and a second component 20 which are connected to each other by an energy absorbing attachment configured as a rotational bearing mode energy absorber. In the exemplary case shown in Figures 1a, 1b, the energy absorbing attachment is formed by two notches 11a, 11b arranged in the first component 10, and two pins 31a, 31b which join the first component 10 with the second component 20 and each engage in a respective one of the notches 11a, 11b.

The notches 11a, 11b each run along a respective circular arc. In particular, as seen in Figure 1a, the respective centre lines of both notches 11a, 11b in this embodiment lie on a common circle C with centre point P. An axis of rotation of the first and the second components 10, 20 relative to each other runs through said centre point P and is defined by a central pin 32 connecting the first and the second components 10, 20.

Figure 1b shows pin 31a running through a hole 12a in the first component 10, and through a hole 22a in the second component 20. Pin 31b preferably is installed analogously (not illustrated in Figure 1b). Thereby, the pins 31a, 31b statically connect the first and the second components 10, 20. Accordingly, a movement of the first and the second component relative to each other is suppressed unless a force exceeding an impairing strength is applied thereon.

In case, however, a load impairing the assembly is exerted thereon, a resulting failure is controlled by means of the comprised energy absorbing attachment: Indeed, as apparent from Figure 1a illustrating a force F acting on the second component 20 at a length L from the centre point P, under such impact entailing a failure abolishing the stability of the first and second component's connection, the pins 31a, 31b are guided, within the notches 11a, 11b, in rotational direction R, thereby damaging the first component's 10 material at the ground of the notches 11a, 11b through bearing mode failure.

Accordingly, the notches 11a, 11b thus each serve as rotational bearing mode absorption channels, and the energy absorbing attachment thus provides a rotational bearing mode absorption.

As further indicated in Figure 1a, at the centre point P, the circular arc of notch 11a encloses an angle α. In this advantageous example, 60° ≤ α ≤ 90° holds true.

In the embodiment depicted, the notches 11a, 11b are congruent to each other. In particular, the circular arc of notch 11b likewise encloses the same angle α, such that the circular arcs (lying on the common circle C) along which the notches 11a, 11b respectively run have the same lengths. As a consequence, when the pins 31a, 31b each move in their corresponding notch 11a, 11b due to said force F being applied, the respective ends of the notches 11a, 11b collectively oppose to said force and terminate the rotation, such that a structural integrity can advantageously be maintained.

As further means for stopping the rotation and, therewith, the bearing mode absorption, one or both notches 11a, 11b might narrow or flatten in rotational direction, or might exhibit an uneven (e.g., knobby or corrugated) boundary (not shown).

Among further possibilities, the first and the second component 10, 20 both may be parts of an aircraft (not shown), for instance. As a particular example, the first component 10 may be an outer rib of an aircraft's hydrogen tank (which may at least partially consist of a composite), and the second component 20 may at least belong to a tank mount (which may form part of a fuselage reinforcement structure). The energy absorption attachment of the assembly may thus integrate a potential crash absorption into existing structures which in this manner may have an augmented functionality.

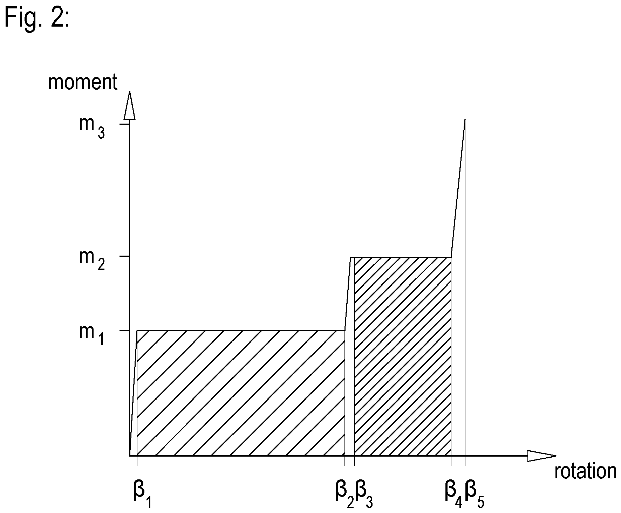

Figure 2 provides a diagram illustrating an exemplary moment-rotation characteristic of an energy absorbing attachment of an assembly according to the present invention. The diagram reflects the behaviour at one pin, and the integral under the moment-rotation curve yields the energy absorbed by the energy absorbing attachment realised by that pin and a corresponding notch.

Such diagram may be used to design an assembly with desired energy absorption characteristics. For instance, it may serve to determine an appropriate number of notches and pins a particular energy absorbing attachment should have, or an advantageous length and/or included angle of the included notch/es.

The steps in the diagram reflect different notch geometries (e.g., depths) that control the load necessary to pull the pin/s through the notch.

As apparent from the diagram, in a main bearing absorption phase in which a rotation is between a first angle β₁ and a second angle β₂, the attachment is loaded with a first moment m₁. In a sector from the second angle βz to a third angle β₃, the rotation linearly correlates with a moment increasing to a second moment m₂ at which the rotation slows down, e.g., due to a narrowed and/or flattened notch, through the sector from the third angle β₃ to a fourth angle β₄. In a further sector from the fourth angle β₄ to a fifth angle β₅ the rotation linearly correlates with a moment increasing to a third moment m₃ at which the rotation stops, e.g. due to the pin striking against an end of the notch. Preferably, the notch is configured to provide for smooth transitions, between different moment levels in the moment-rotation curve.

In the embodiment of Figures 1a, 1b, depending on a pin diameter, the pins 31a, 31b strike against the end of the respective notch 11a, 11b when β is almost α.

Disclosed is an assembly 100 comprising a first component 10 and a second component 20 which are statically connected to each other by an energy absorbing attachment. The energy absorbing attachment is formed by at least one notch 11a, 11b arranged in the first component 10 and running along a circular arc, and by at least one pin 31a, 31b joining the first component 10 with the second component 20. The at least one pin 31a, 31b engages into the at least one notch 11a, 11b and is adapted to be guided therein, under a load impairing the assembly, in a rotational direction R.

Further disclosed is an aircraft comprising such assembly 100.

### Reference signs

- 10: first component
- 11a, 11b: notch
- 12a: hole

- 20: second component
- 22a: hole

- 31a, 31b: pin
- 32: central pin

- 100: assembly

- α: angle

- C: circle
- F: force
- L: length
- P: centre point
- R: rotational direction

## Claims

1. Assembly (100) comprising a first component (10) and a second component (20) which are statically connected to each other by an energy absorbing attachment formed by
- at least one notch (11a, 11b) arranged in the first component (10) and running along a circular arc, and
- at least one pin (31a, 31b) joining the first component (10) with the second component (20), wherein the at least one pin engages in the at least one notch (11a, 11b) and is adapted to be guided therein, under a load impairing the assembly, in a rotational direction (R).

2. Assembly according to claim 1, wherein the energy absorbing attachment is a bearing mode absorber.

3. Assembly according to one of claims 1 or 2, wherein an angle (α) enclosed by the circular arc at a centre point (P) thereof is
- at least 40°, at least 50°, or at least 60°; and/or
- at most 150°, at most 120°, or at most 100°.

4. Assembly according to one of the preceding claims, wherein following the rotational direction (R), in at least a portion thereof the notch (11a, 11b)
- narrows,
- flattens out, and/or
- has a boundary comprising one or several protrusion/s.

5. Assembly according to one of the preceding claims, wherein the at least one pin (31a) extends in or through a hole (12a) formed, at a ground of the at least one notch (11a), in the first component (10).

6. Assembly according to one of the preceding claims, wherein the at least one notch is a first notch (11a) and the at least one pin is a first pin (31a), and wherein the energy absorbing attachment further is formed by at least one further notch (11b) running along a further circular arc, and at least one further pin (31b) engaging into the further notch (11b).

7. Assembly according to claim 6, wherein the circular arcs along which the first notch (11a) and the at least one further notch (11b) respectively run have a common centre point (P).

8. Assembly according to one of claims 5 or 6, wherein
- the at least one further notch (11b) is formed in the first component (10) or
- the at least one further notch is formed in the second component.

9. Assembly according to one of the preceding claims, further comprising a third component statically connected, by the energy absorbing attachment, to the first component and the second component.

10. Assembly according to one of the preceding claims, wherein the first component (10) and/or the second component (20) at least partially consist/s of a composite material.

11. Assembly according to one of the preceding claims, wherein the first component (10) and the second component (20) are constituents of an aircraft.

12. Assembly according to claim 11, wherein the first component (10) and/or the second component (20) is at least a portion of an airframe.

13. Assembly according to one of the claims 11 or 12, wherein the first component (10) is at least a portion of a tank of an aircraft, and the second component (20) is at least a portion of a fuselage reinforcement structure of the aircraft, or vice versa.

14. Aircraft comprising at least one assembly (100) according to one of the preceding claims.
